# EUROPÄISCHE PATENTSCHRIFT

(11) **EP 2 345 834 B1**
(45) Veröffentlichungstag und Bekanntmachung des Hinweises auf die Patenterteilung: **19.03.2014**
(21) Anmeldenummer: 11150050.0
(22) Anmeldetag: 04.01.2011
(51) Int. Cl.: F16N 11/08, F16N 19/00

(54) **Schmiereinrichtung und Verfahren zum Betrieb der Schmiereinrichtung**
Lubricating device and method for operating same
Dispositif de lubrification et procédé de fonctionnement du dispositif de lubrification

(30) Priorität: 15.01.2010 DE 102010004839
(43) Veröffentlichungstag der Anmeldung: 20.07.2011
(73) Patentinhaber: Aktiebolaget SKF, 41 550 Göteborg (SE)
(72) Erfinder: Kreutzkämper, Jürgen, 10405 Berlin (DE); Sattelberger, Paul, 68799 Reilingen (DE)
(74) Vertreter: Schonecke, Mitja

(56) Entgegenhaltungen:
- EP-A1- 1 213 529
- JP-A- 2006 029 352
- US-A1- 2004 155 068

## Beschreibung

Die vorliegende Erfindung betrifft eine Schmiereinrichtung mit einem Behälter für ein Schmiermittel, wobei im Behälter wenigstens eine bewegliche Kolbeneinheit zur Bildung eines Schmiermittelraums vorgesehen ist, wobei der Schmiermittelraum wenigstens einen Schmiermitteleinlass und wenigstens einen Schmiermittelauslass aufweist. Die Erfindung betrifft weiter ein Verfahren zum Betrieb der Schmiereinrichtung.

Bekannte Schmiereinrichtungen (Z.B EP 1213529) weisen beispielsweise eine am Behälter befestigte Pumpe auf, die im Behälter befindliches Schmiermittel aus dem Behälter zum Schmiermittelauslass pumpt. Dadurch lässt sich eine mit dem Schmiermittelauslass verbundene Vorrichtung mit Schmiermittel versorgen. Zum fehlerfreien Betrieb der Schmiereinrichtung und der zu schmierenden Vorrichtung ist es erforderlich, dass keine Luft im Schmiermittel vorhanden ist beziehungsweise in dieses gelangt. Das im Behälter durch das bevorratete Schmiermittel verwendete Volumen wird jedoch durch die Entnahme des Schmiermittels kleiner. Um das derart variable Volumen gegen das Eindringen von Luft abzudichten befindet sich der bewegliche Kolben im Behälter, der den Schmiermittelraum begrenzt. Der Kolben dichtet den Schmiermittelraum gegenüber dem restlichen Behältervolumen ab, so dass keine Luft aus dem Behälter in den Schmiermittelraum eindringen kann. Wird nun durch die Pumpe Schmiermittel aus dem Schmiermittelraum entnommen, folgt der bewegliche Kolben dem kleiner werdenden Volumen, wobei gleichzeitig über ein Belüftungsventil oder eine Öffnung das größer werdende rechtliche Behältervolumen mit Luft aufgefüllt wird. Der Kolben ist in dieser bekannten Ausführungsform eine rein passive Komponente, die lediglich dem sich ändernden Volumen des Schmiermittelraums folgt.

Sobald das im Schmiermittelraum befindliche Schmiermittel zu einem vorgegebenen Anteil verbraucht ist muss neues Schmiermittel nachgefüllt werden. Dazu ist die Pumpe mit einem Schmiermittelreservoir verbunden und kann bei entsprechendem Betrieb neues Schmiermittel in den Schmiermittelraum einbringen. Dabei wird der Kolben in entgegen gesetzter Richtung bewegt, so dass sich das Volumen des Schmiermittelraums kontinuierlich vergrößert.

Alternativ lässt sich die Bereitstellung des Schmiermittels am Schmiermittelauslass auch durch eine aktive Bewegung des Kolbens realisieren. Dabei wird durch Bewegung des Kolbens in Richtung des Schmiermittelauslasses das Schmiermittel des Schmiermittelraums durch Verkleinerung des Volumens aus dem Schmiermittelraum gedrückt und somit am Schmiermittelauslass bereitgestellt.

Bekannte Schmiereinrichtungen der eingangs genannten Art werden jedoch im gewöhnlichen Betrieb meistens nicht vollständig entleert. Folglich verbleibt ständig ein kleiner Rest des Schmiermittels im Schmiermittelraum. Zur erneuten Befüllung des Schmiermittelraums mit Schmiermittel wird der Kolben in der entgegen gesetzten Richtung bewegt, wobei gleichzeitig Schmiermittel über den Schmiermitteleinlass in den Schmiermittelraum geleitet wird, beziehungsweise Schmiermittel in den Schmiermittelraum gepumpt, wodurch der Kolben bewegt wird. Das Volumen des Schmiermittelraums wird dabei jeweils vergrößert.

Es ist Aufgabe der vorliegenden Erfindung, eine verbesserte Schmiereinrichtung und ein Verfahren zum Betrieb der Schmiereinrichtung bereitzustellen.

Diese Aufgabe wird durch eine Schmiereinrichtung mit den Merkmalen Patentanspruchs 1 gelöst. Die verfahrensbezogene Aufgabe durch ein Verfahren mit den Merkmalen des Patentanspruchs 8 gelöst. Vorteilhafte Ausgestaltungen sind Gegenstand der jeweils abhängigen Unteransprüche.

Gemäß Patentanspruch 1 wird eine Schmiereinrichtung mit einem Behälter für ein Schmiermittel angegeben, wobei im Behälter wenigstens eine bewegliche Kolbeneinheit zur Bildung eines Schmiermittelraums vorgesehen ist, wobei der Schmiermittelraum wenigstens zwei Öffnungen aufweist, von denen eine als Schmiermitteleinlass und die andere als Schmiermittelauslass ausgeführt ist. Eine erste der Öffnungen ist dabei in der Kolbeneinheit angeordnet. Die andere Öffnung ist vorzugsweise derart im Schmiermittelraum angeordnet, dass sie der in der Kolbeneinheit angeordneten Öffnung im Wesentlichen gegenüberliegt. Dadurch weisen die beiden Öffnungen bei jedem Stand der Kolbeneinheit im Behälter in Bezug auf die Größe des Schmiermittelraums den maximal möglichen Abstand auf. Im Folgenden wird die Erfindung anhand eines Beispiels beschrieben, wobei die in der Kolbeneinheit angeordnete Öffnung der Schmiermittel Einlass ist. Demzufolge die andere Öffnung als Schmiermittelauslass ausgeführt.

Alternativ ist es jedoch auch möglich, den Schmiermittelauslass in der Kolbeneinheit anzuordnen und entsprechend den Schmiermitteleinlass auf der gegenüberliegenden Seite des Schmiermittelraums anzuordnen. Dies trifft auf sämtliche folgende Ausführungen der Erfindung zu.

Die Kolbeneinheit kann in Analogie zu bekannten Ausführungsformen der eingangs beschriebenen Art einen passiven oder aktiven Kolben umfassen, der den Schmiermittelraum begrenzt. Im Falle eines passiven Kolbens weist die Schmiereinrichtung eine Pumpe auf, die bei entsprechendem Betrieb Schmiermittel aus dem Schmiermittelraum zum Schmiermittelauslass pumpt, wodurch sich das Volumen des Schmiermittelraums verkleinert. Der Kolben folgt der Verkleinerung des Volumens passiv durch eine entsprechende Bewegung im Behälter. Bei aktiver Ausführung wird der Kolben beispielsweise durch Druckbeaufschlagung oder mechanisch bewegt, wodurch Schmiermittel zum Schmiermittelauslass transportiert wird.

Bei bekannten Schmiereinrichtungen ist der Schmiermitteleinlass auf der gleichen Seite des Schmiermittelraums wie der Schmiermittelauslass angeordnet. Folglich erfolgt die Befüllung des Schmiermittelraums mit frischem Schmiermittel derart, dass das nicht verbrauchte Schmiermittel zwischen dem neuen Schmiermittel und dem Kolben im Schmiermittelraum verbleibt. Bei langen Einsatzzeiten der Schmiereinrichtung oder zunehmenden Temperaturen und ähnlichen Einflüssen während der Einsatzzeit altert das im Schmiermittelraum verbleibende Schmiermittel. Insbesondere bei Verwendung von Schmierfetten verringert sich mit zunehmender Einsatzdauer der Ölanteil des Schmierfetts. Das Schmierfett wird dadurch härter, was den Betrieb der Schmiereinrichtung beeinträchtigen kann. Dies zu vermeiden ist insbesondere eine weitere Aufgabe der Erfindung.

Durch die Anordnung des Schmiermitteleinlasses in der Kolbeneinheit ist jeweils sichergestellt, dass bei Befüllung des Schmiermittelraums das neue Schmiermittel unmittelbar unterhalb der Kolbeneinheit in den Schmiermittelraum eingebracht wird. Das aufgrund der nicht vollständigen Entleerung des Schmiermittelraums noch darin befindliche alte Schmiermittel befindet sich nach der Befüllung zwischen dem neuen Schmiermittel und dem Schmiermittelauslass. Dadurch wird auf einfache Weise sichergestellt, dass bei erneuter Entnahme von Schmiermittel zunächst das alte Schmiermittel des letzten Zyklus am Schmiermittelauslass bereitgestellt wird und nachfolgend das neue eingefüllte Schmiermittel. Folglich ist bei jedem Zyklus ein vollständiger Austausch des Schmiermittels gewährleistet.

Die gleichen Vorteile ergeben sich analog, wenn der Schmiermittelauslass im Kolben angeordnet ist und der Schmiermitteleinlass entsprechend dem Schmiermittelauslass gegenüberliegt. In diesem Fall wird das neue Schmiermittel beim Nachfüllen des Schmiermittelraums dem Kolben gegenüberliegend eingebracht. Das alte Schmiermittel befindet sich in dieser Ausführung ebenfalls zwischen dem neuen Schmiermittel und dem Schmiermittelauslass. Somit ist auch bei dieser Anordnung der Öffnungen ein vollständiger Austausch des Schmiermittels in jedem Arbeitszyklus sichergestellt.

In einer bevorzugten Ausführungsform der Erfindung ist der Kolben derart angeordnet, dass bei Bewegung in einer Richtung eine Verkleinerung des Volumens des Schmiermittelraums bewirkt wird, wobei Schmiermittel am Schmiermittelauslass zur Verfügung gestellt wird und dass bei Bewegung in der anderen Richtung eine Vergrößerung des Volumens des Schmiermittelraums bewirkt wird, wobei Schmiermittel vom Schmiermitteleinlass in den Schmiermittelraum geführt wird.

In einer alternativen Ausführungsform der Erfindung weist die Schmiereinrichtung eine Pumpe auf, durch die Schmiermittel aus dem Schmiermittelraum am Schmiermittelauslass zur Verfügung stellbar ist. In diesem Fall ist die Kolbeneinheit bevorzugt nur passiv beweglich.

In einer bevorzugten Ausführungsform der Erfindung ist der Schmiermitteleinlass als Durchführung im Kolben ausgeführt, die mit einer Befülleinrichtung über eine Leitung verbunden ist. Mittels dieser Anordnung lässt sich bei Nachfüllungen des Schmiermittelraums auf einfache Weise Schmiermittel durch die Leitung am Schmiermitteleinlass bereitstellen. Die Befülleinrichtung kann beispielsweise als außen am Behälter angeordnete Pumpe ausgeführt sein, die in einem Reservoir befindliches Schmiermittel in Abhängigkeit der Bewegung des Kolbens durch die Leitung zum Schmiermitteleinlass pumpt. Sobald die Pumpe Schmiermittel am Schmiermitteleinlass bereitstellt wird der Schmiermittelraum neu befüllt. Der Kolben der Kolbeneinheit bewegt sich dabei entsprechend. Die Abstimmung der Arbeitsschritte muss derart sein, dass keine Luft in den Schmiermittelraum gelangt. Nur so ist eine kontinuierliche Bereitstellung von Schmiermittel am Schmiermittelauslass zu gewährleisten. Entsprechend ist die Steuerung der Pumpe zu koordinieren.

In einer bevorzugten Ausführungsform der Erfindung ist die Befülleinrichtung auf der Seite des Behälters angeordnet, die dem Schmiermittelraum bezüglich des Kolbens gegenüberliegt. Bei dieser Anordnung ist eine besonders einfache Führung der Leitung im nicht zum Schmiermittelraum gehörenden Volumen des Behälters möglich. Die Leitung lässt sich vollständig zwischen der Befülleinrichtung und dem Kolben im Behälter anordnen.

In einer bevorzugten Ausführungsform der Erfindung ist die Leitung als spiralförmiger Schlauch ausgeführt. Ein derart geformter Schlauch kann den Bewegungen des Kolbens und damit einer Verkleinerungen des ihm zur Verfügung stehenden Volumens optimal folgen, ohne dass Knicke oder übermäßige Belastungen auftreten.

In einer bevorzugten Ausführungsform der Erfindung weist der Kolben auf der dem Schmiermittelraum zugewandten Seite wenigstens eine Nut auf, die mit der ersten Öffnung verbunden ist. Mittels der Nut lässt sich das nachströmende Schmiermittel während der Befüllung des Schmiermittelraums optimal verteilen. Dies ist insbesondere bei der Verwendung von dickflüssigen Schmiermitteln, wie beispielsweise Fetten von Vorteil.

Gemäß Patentanspruch 8 wird ein Verfahren zum Betrieb einer Schmiermitteleinrichtung nach einem der Ansprüche 1 bis 7 angegeben, aufweisend folgende Verfahrensschritte:
- Einbringen von Schmiermittel über den Schmiermitteleinlass in den Schmiermittelraum, derart, dass sich nicht verbrauchtes Schmiermittel zwischen dem neuen Schmiermittel und dem Schmiermittelauslass befindet,
- Gleichzeitiges Bewegen des Kolbens derart, dass das Volumen des Schmiermittelraums vergrößert wird,
- Bereitstellung von Schmiermittel am Schmiermittelausgang,
- Bewegen des Kolbens derart, dass das Volumen des Schmiermittelraums verkleinert wird.

Durch dieses Verfahren wird sichergestellt, dass in jedem Arbeitszyklus ein vollständiger Austausch des Schmiermittels stattfindet. Folglich verbleibt kein Schmiermittel über längere Zeit im Schmiermittelraum, wodurch eine Erhöhung der Lebensdauer der Schmiereinrichtung resultiert. Vorzugsweise werden die Verfahrensschritte zyklisch wiederholt.

In einer bevorzugten Ausführungsform der Erfindung werden vor der ersten Vergrößerung des Volumens folgende Verfahrensschritte durchgeführt:
- Befüllen der Verbindung zwischen Schmiermitteleinlass und Schmiermittelraum mit Schmiermittel,
- Befüllen des Schmiermittelraums mit Schmiermittel,
- Gleichzeitiges Entlüften des Schmiermittelraums,
- Einsetzen der Kolbeneinheit derart, dass kein Gas in den Schmiermittelraum gelangt.

Dadurch wird sichergestellt, dass keine Luft im Schmiermittelraum verbleibt, die den Betrieb der zu schmierenden Vorrichtung stören könnte.

Weitere Vorteile und Ausgestaltungen der Erfindung ergeben sich aus dem nachfolgend erläuterten Ausführung Beispiel anhand der beigefügten Zeichnungen. Es zeigen:
Figur 1 eine aus dem Stand der Technik bekannte Schmiereinrichtung,
Figur 2 eine Schmiereinrichtung gemäß einer Ausführungsform der Erfindung,
Figur 3 die Schmiereinrichtung der Figur 2 in einem anderen Betriebszustand und
Figur 4 eine Darstellung der Unterseite eines Kolbens.

Die im Folgenden beschriebenen Ausführungsformen des Standes der Technik und der Erfindung beziehen sich jeweils auf die eingangs beschriebenen Ausführungen mit passiver Kolbeneinheit. In allen der nachfolgend beschriebenen Ausführungsbeispiele ist jedoch auf analoge Weise die Verwendung eines aktiven Kolbens möglich.

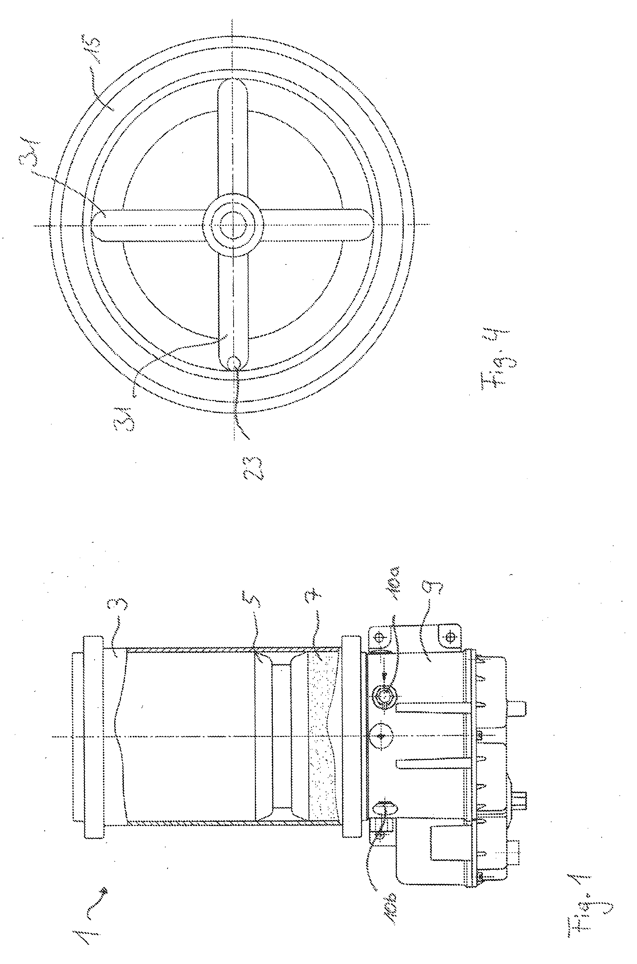

In der Figur 1 ist eine aus dem Stand der Technik bekannte Schmiereinrichtung 1 dargestellt. Sie umfasst einen Behälter 3, der beispielsweise aus Metall, Glas oder Kunststoff besteht. Der Behälter 3 ist in der Figur 1 teilweise geöffnet dargestellt, um im Inneren befindliche Bauteile sichtbar zu machen. Im Behälter 3 ist ein beweglicher Kolben 5 angeordnet. Der Kolben 5 ist im Behälter 3 auf und ab beweglich. Durch den Kolben 5 und die Begrenzungen des Behälters 3 wird ein Schmiermittelraum 7 definiert, in dem sich ein Schmiermittel, beispielsweise ein Schmierfett befindet. Auf der bezüglich des Schmiermittelraums 7 dem Kolben 5 gegenüberliegenden Seite des Behälters 3 befindet sich eine Fördereinrichtung 9. Die Fördereinrichtung 9 weist einen Schmiermittelauslass 10a auf, der mit dem Schmiermittelraum 7 verbunden ist. Zur Entnahme von Schmiermittel weist die Fördereinrichtung 9 eine hier nicht dargestellte Pumpe auf, durch die Schmiermittel aus dem Schmiermittelraum 7 zum Schmiermittelauslass 10a gepumpt werden kann. Der Kolben 5 ist ihm dargestellten Ausführungsbeispiele nicht aktiv beweglich, sondern folgt lediglich in der durch die Pumpe ausgelösten Veränderung des Volumens des Schmiermittelraums 7. An den Schmiermittelauslass 10a ist beispielsweise eine hier nicht dargestellte Leitung angeschlossen, die das Schmiermittel entsprechend an eine zu schmierende Vorrichtung weiterleitet.

Sobald der Kolben 5 eine Position nahe der Fördereinrichtung 9 erreicht hat wird die Arbeitsverdichtung der Pumpe umgekehrt, so dass neues Schmiermittel in den Schmiermittelraum 7 eingebracht wird. Zu diesem Zweck weist die Fördereinrichtung 9 einen Schmiermitteleinlass 10b auf. Der Schmiermitteleinlass 10b ist beispielsweise über eine nicht dargestellte Leitung mit einem Schmiermittelreservoir verbunden. Alternativ kann die Fördereinrichtung 9 eine zweite Pumpe enthalten, durch die Schmiermittel in den Schmiermittelraum 7 gepumpt wird. Die zweite Pumpe kann auch außerhalb der Schmiereinrichtung 1 angeordnet sein.

Die Endposition des Kolbens 5 bei Entleerung des Schmiermittelraums 7 ist derart gewählt, dass der Schmiermittelraum 7 niemals vollständig entleert wird. Bei vollständiger Entleerung des Schmiermittelraums 7 könnte es zu einer Störung der Pumpe der Fördereinrichtung 9 kommen. Folglich verbleibt ein Rest des Schmiermittels zwischen dem Kolben 5 und den Schmiermitteleinlass 10b im Schmiermittelraum 7, wenn neues Schmiermittel nachgefüllt wird. Das neu in den Schmiermittelraum 7 eingebrachte Schmiermittel wird folglich in der gewählten Darstellung der Figur 1 unterhalb des alten Schmiermittels eingebracht. Es liegt daher zwischen dem alten Schmiermittel und dem Schmiermittelauslass 10a, so dass bei erneuter Entnahme von Schmiermittel das neue Schmiermittel am Schmiermittelauslass 10a zur Verfügung gestellt wird. Das alte Schmiermittel verbleibt auch bei diesem Zyklus nahezu vollständig im Schmiermittelraum 7. Bei längerer Einsatzzeit der Schmiereinrichtung 1 wird das alte Schmiermittel Alterungserscheinungen zeigen, die den Betrieb der Schmiereinrichtung 1 beeinträchtigen können. Insbesondere bei der Verwendung von Schmierfett kann es durch die Abscheidung von Öl zu Verhärtungen kommen, die unter Anderem die Bewegungen des Kolbens 5 beeinträchtigen. Hinzu kommen verminderte Schmiereigenschaften des gealterten Schmiermittels.

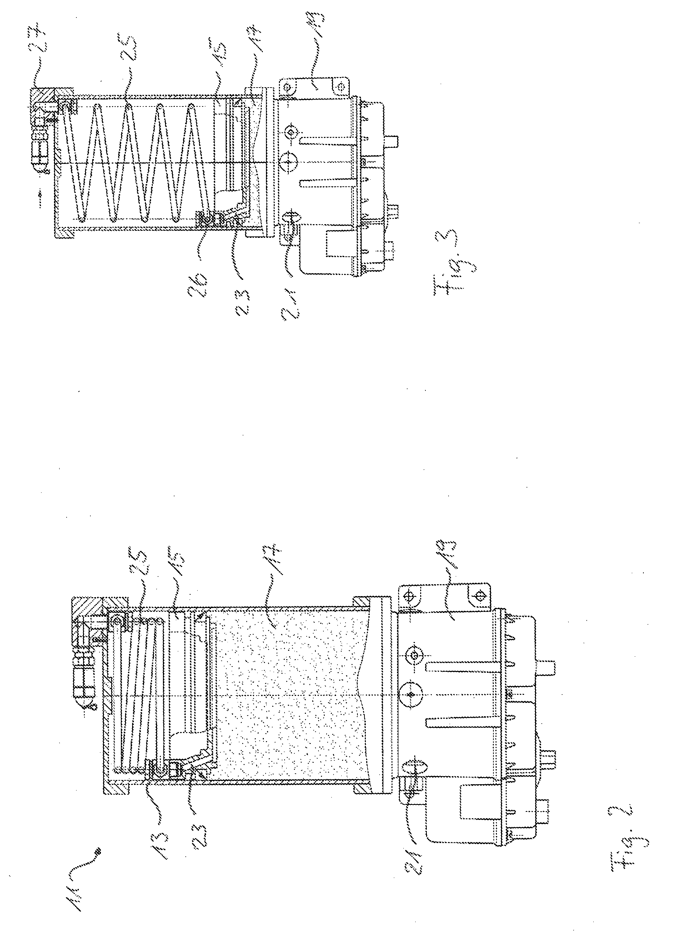

In den Figuren 2 und 3 ist ein bevorzugtes Ausführungsbeispiel der Erfindung in zwei unterschiedlichen Zuständen eines Zyklus dargestellt. Die Figur 2 zeigt eine Schmiereinrichtung 11, die einen Behälter 13 aufweist. Im Behälter 13 ist ein beweglicher Kolben 15 angeordnet, der analog bekannten Ausführung der Figur 1 einen Schmiermittelraum 17 definiert. Der Kolben 15 ist auf und ab beweglich, so dass er passiv Änderungen des Volumens des Schmiermittelraums 17 folgen kann. Am unteren Ende des Behälters 13 ist eine Fördereinrichtung 19 angeordnet, die einen mit dem Schmiermittelraum 17 verbundenen Schmiermittelauslass 21 aufweist. Die Fördereinrichtung 19 weist analog zu dem bekannten Ausführungsbeispiel der Figur 1 eine Pumpe zur Entnahme von Schmiermittel aus dem Schmiermittelraum 17 auf. Der Schmiermittelauslass 21 kann über eine hier nicht dargestellte Leitung mit einer zu schmierenden Vorrichtung verbunden sein.

In der Darstellung der Figur 2 befindet sich der Kolben 15 in seinem maximalen Abstand von der Fördereinrichtung 19, so dass das Volumen des Schmiermittelraums 17 maximal ist. In der Darstellung der Figur 3 befindet sich der Kolben 15 in seinem minimalen Abstand zur Fördereinrichtung 19, so dass das Volumen des Schmiermittelraums 17 minimal ist. Der Kolben 15 weist eine als Schmiermitteleinlass dienende Durchführung 23 auf, über die Schmiermittel in den Schmiermittelraum 17 zuführbar ist. Die Durchführung 23 ist mit einem spiralförmigen Schlauch 25 verbunden, der sich in dem nicht zum Schmiermittelraum 17 gehörigen Volumen des Behälters 13 befindet. Der Schlauch 25 kann beispielsweise über eine an sich bekannte Schlauchkupplung 26 mit der Durchführung 23 verbunden sein.

Entsprechend der Bewegung des Kolbens 15 wird der Schlauch 25 zusammen gedrückt beziehungsweise auseinander gezogen. Am anderen Ende ist der Schlauch 25 mit einer Befülleinrichtung 27 verbunden, über die Schmiermittel zuführbar ist. Die Befülleinrichtung 27 umfasst eine Pumpe, die aus einem nicht dargestellten Reservoir Schmiermittel über den Schlauch 25 in den Schmiermittelraum 17 pumpt, wodurch es zu einer Aufwärtsbewegung des Kolbens 15 kommt. Alternativ kann die Pumpe auch dem Reservoir zugeordnet sein. In diesem Fall weist die Befülleinrichtung 27 lediglich eine Schlauchkupplung zum Anschluss einer Verbindungsleitung zu Pumpe auf.

Aufgrund der gegenüberliegenden Anordnung der Durchführung 23 und des Schmiermittelauslasses 21 befindet sich das im Schmiermittelraum 17 verbliebene Schmiermittel bei Nachfüllung von neuem Schmiermittel zwischen diesem und dem Schmiermittelauslass 21. Bei nachfolgender Befüllung mit Schmiermittel wird folglich zunächst das alte Schmiermittel am Schmiermittelauslass 21 bereitgestellt und erst wenn dieses vollständig entfernt ist das nachgefüllte Schmiermittel. Folglich kommt es bei jedem Zyklus zu einem nahezu vollständigen Austausch des Schmiermittels, wodurch aufgrund der Alterung des im Schmiermittelraum verbleibenden Schmiermittels entstehende, nachteilige Effekte auf die Schmiereinrichtung 11 bei bekannten Ausführungen vermieden werden.

In der Figur 4 ist eine Draufsicht der Seite des Kolbens 15 dargestellt, die dem Schmiermittelraum 17 zugewandt ist. An die Durchführung 23 schließen sich mehrere in die Stirnseite des Kolbens 15 eingebrachte Nuten 31 an. Bei Zuführung des Schmiermittels durch den Schlauch 25 in die Durchführung 23 wird das Schmiermittel über die Nuten 31 auf der Stirnfläche des Kolbens 15 optimal verteilt, so dass der Schmiermittelraum 17 gleichmäßig mit Schmiermittel befüllt werden kann.

Bei der Fertigung von Schmiereinrichtungen gemäß den Ausführungen der Erfindung ist darauf zu achten, dass keine Luft in das Schmiermittel gelangt. Folglich müssen sämtliche Leitungen, Pumpen und der Schmiermittelraum vorab ohne Lufteinschluss mit Schmiermittel befüllt werden. Dies kann beispielsweise bei der Verwendung von Schmierfett dadurch erfolgen, dass die einzelnen Komponenten zunächst mit Schmierfett befüllt werden und in befülltem Zustand zusammengebaut werden. Insbesondere der Schlauch 25 muss vorab befüllt werden, damit bei der ersten Zuführung von Schmiermittel durch den Schlauch 25 keine Luft in den Schmiermittelraum 17 gelangt.

Der Betrieb der Schmiereinrichtung erfolgt zyklisch derart, dass zunächst Schmiermittel durch die Pumpe der Fördereinrichtung 19 aus dem Schmiermittelraum 17 entnommen wird. Das Schmiermittel wird am Schmiermittelauslass 21 bereitgestellt und an eine zu schmierende Vorrichtung weitergeleitet. Das Volumen des Schmiermittelraums 17 nimmt dabei kontinuierlich ab, wodurch der Kolben 15 in Richtung des Schmiermittelauslasses 21 bewegt wird. Sobald der Kolben 15 in einer vordefinierten Minimalposition angelangt ist wird durch eine weitere Pumpe der Fördereinrichtung 19 oder eine externe Pumpe Schmiermittel durch den Schlauch 25 und die Durchführung 23 des Kolbens 15 in den Schmiermittelraum 17 eingebracht. Sobald der Schmiermittelraum 17 sein maximal mögliches Volumen erreicht hat und mit Schmiermittel gefüllt ist wird wieder über die Pumpe der Fördereinrichtung 19 Schmiermittel am Schmiermittelauslass 21 bereitgestellt.

### Bezugszeichenliste

- 1: Schmiereinrichtung
- 3: Behälter
- 5: Kolben
- 7: Schmiermittelraum
- 9: Fördereinrichtung
- 10a: Schmiermitteleinlass
- 10b: Schmiermittelauslass
- 11: Schmiereinrichtung
- 13: Behälter
- 15: Kolben
- 17: Schmiermittelraum
- 19: Fördereinrichtung
- 21: Schmiermittelauslass
- 23: Durchführung
- 25: Schlauch
- 27: Befülleinrichtung
- 31: Nut

## Patentansprüche

1. Schmiereinrichtung (11) mit einem Behälter (13) für ein Schmiermittel, wobei im Behälter wenigstens eine bewegliche Kolbeneinheit (15) zur Bildung eines Schmiermittelraums (17) vorgesehen ist, wobei der Schmiermittelraum (17) wenigstens zwei Öffnungen (23, 21) aufweist, von denen eine als Schmiermitteleinlass (23) und die andere als Schmiermittelauslass (21) ausgeführt ist, wobei eine erste der Öffnungen in der Kolbeneinheit (15) angeordnet ist,
**dadurch gekennzeichnet,**
**dass** die wenigstens zwei Öffnungen (23, 21) derart angeordnet sind, dass sich bezüglich des Schmiermittelraumes (17) der Schmiermitteleinlass (23) und der Schmiermittelauslass (21) in jedem Befüllzustand des Schmiermittelraumes (17) gegenüberliegen.

2. Schmiereinrichtung nach Anspruch 1, weist die Schmiereinrichtung (11) eine Pumpe (19) auf, durch die Schmiermittel aus dem Schmiennittelraum am Schmiennittelauslass zur Verfügung stellbar ist.

3. Schmiereinrichtung nach Anspruch 1 oder 2, wobei die erste Öffnung (23) als Durchführung in der Kolbeneinheit (15) ausgeführt ist, die mit einer Befülleinrichtung über eine Leitung (25) verbunden ist.

4. Schmiereinrichttmg nach Anspruch 3, wobei die Befülleinrichtung (27) auf der Seite des Behälters (13) angeordnet ist, die dem Schmiermittelraum (17) bezüglich der Kolbeneinheit (15) gegenüberliegt.

5. Schmiereinrichtung nach Anspruch 3 oder 4, wobei die Leitung (25) als spiralförmiger Schlauch ausgeführt ist.

6. Schmiereinrichtung nach einem der vorherigen Anspräche, wobei die Kolbeneinheit (15) auf der dem Schmiermittelraum (17) zugewandten Seite wenigstens eine Nut (31) aufweist, die mit dem Schmiermitteleinlass verbunden ist.

7. Schmiereinrichtung nach einem der vorherigen Ansprüche, wobei die Nut (31) gerade, kreis- oder spiralförmig ausgeführt ist.

8. Verfahren zum Betrieb einer Schmiermitteleinrichtung nach einem der Ansprüche 1 bis 7, aufweisend folgende Verfahrensschritte:
- Einbringen von Schmiermittel über den Schmiermitteleinlass (23) in den Schmiermittelraum, (17)
- Gleichzeitiges Bewegen der Kolbeneinheit (15) derart, dass das Volumen des Schmiermittelraums vergrößert wird,
- Bereitstellung von Schmiermittel am Schmiermittelausgang (21),
- Gleichzeitiges Bewegen der Kolbeneinheit (15) derart, dass das Volumen des Schmiermittelraums (17) verkleinert wird.

9. Lageranordnung (11) nach Anspruch 8, wobei die Verfahrensschritte zyklisch wiederholt werden.

10. Verfahren nach einem der Ansprüche 8 oder 9, wobei vor der ersten Vergrößerung des Volumens folgende Verfahrensschritte durchgeführt werden:
- Befüllen der Verbindung zwischen Schmiermitteleinlass (23) und Schmiermittelraum (17) mit Schmiermittel,
- Befüllen des Schmiermittelraums (17) mit Schmiermittel,
- Gleichzeitiges Entlüften des Schmiermittelraums,
- Einsetzen der Kolbeneinheit (15) derart, dass kein Gas in den Schmiermittelraum gelang

## Claims

1. Lubricating device (11), having a container (13) for a lubricant, wherein at least one movable piston unit (15) for forming a lubricant chamber (17) is provided, wherein the lubricant chamber (17) has at least two openings (23, 21), one of which is implemented as a lubricant inlet (23) and the other of which is implemented as a lubricant outlet (21), wherein a first one of the openings is arranged in the piston unit (15),
**characterized in that**
the at least two openings (23, 21) are arranged such that, in relation to the lubricant chamber (17), the lubricant inlet (23) and the lubricant outlet (21) lie opposite one another in any filling state of the lubricant chamber (17).

2. Lubricating device according to Claim 1, wherein the lubricating device (11) has a pump (19), via which lubricant from the lubricant chamber can be made available at the lubricant outlet.

3. Lubricating device according to Claim 1 or 2, wherein the first opening (23) is implemented as a lead-through, which is connected to a filling device via a line (25), in the piston unit (15).

4. Lubricating device according to Claim 3, wherein the filling device (27) is arranged on that side of the container (13) which, in relation to the piston unit (15), lies opposite the lubricant chamber (17).

5. Lubricating device according to Claim 3 or 4, wherein the line (25) is implemented as a helical tube.

6. Lubricating device according to one of the preceding claims, wherein the piston unit (15), on the side facing the lubricant chamber (17), has at least one groove (31) which is connected to the lubricant inlet.

7. Lubricating device according to one of the preceding claims, wherein the groove (31) is implemented so as to be straight, annular or helical.

8. Method for operating a lubricating device according to one of Claims 1 to 7, having the following method steps:
- infeeding lubricant into the lubricant chamber (17) via the lubricant inlet (23),
- simultaneously moving the piston unit (15) such that the volume of the lubricant chamber is enlarged,
- making available lubricant at the lubricant outlet (21),
- simultaneously moving the piston unit (15) such that the volume of the lubricant chamber (17) is reduced.

9. Method according to Claim 8, wherein the method steps are repeated in a cyclical manner.

10. Method according to either of Claims 8 and 9, wherein, prior to the first enlargement of the volume, the following method steps are carried out:
- filling the connection between the lubricant inlet (23) and the lubricant chamber (17) with lubricant,
- filling the lubricant chamber (17) with lubricant,
- simultaneously ventilating the lubricant chamber,
- inserting the piston unit (15) in such a manner that no gas passes into the lubricant chamber.

## Revendications

1. Dispositif de lubrification (11) comprenant un contenant (13) pour un lubrifiant, au moins une unité de piston (15) mobile étant prévue dans le contenant pour former une chambre de lubrifiant (17), la chambre de lubrifiant (17) comportant au moins deux ouvertures (23, 21), parmi lesquelles l'une est réalisée sous forme d'entrée de lubrifiant (23) et l'autre est réalisée sous forme de sortie de lubrifiant (21), une première des ouvertures étant disposée dans l'unité de piston (15),
**caractérisé en ce que**
les au moins deux ouvertures (23, 21) sont disposées de telle sorte que l'entrée de lubrifiant (23) et la sortie de lubrifiant (21) soient, par rapport à la chambre de lubrifiant (17), opposées l'une à l'autre dans chaque état de remplissage de la chambre de lubrifiant (17).

2. Dispositif de lubrification selon la revendication 1, le dispositif de lubrification (11) comprenant une pompe (19) au moyen de laquelle du lubrifiant provenant de la chambre de lubrifiant peut être mis à disposition au niveau de la sortie de lubrifiant.

3. Dispositif de lubrification selon la revendication 1 ou 2, dans lequel la première ouverture (23) est réalisée sous forme de passage dans l'unité de piston (15), lequel est relié à un dispositif de remplissage par le biais d'une conduite (25).

4. Dispositif de lubrification selon la revendication 3, dans lequel le dispositif de remplissage (27) est disposé du côté du contenant (13) qui est opposé à la chambre de lubrifiant (17) par rapport à l'unité de piston (15).

5. Dispositif de lubrification selon la revendication 3 ou 4, dans lequel la conduite (25) est réalisée sous forme de tube hélicoïdal.

6. Dispositif de lubrification selon l'une quelconque des revendications précédentes, dans lequel l'unité de piston (15) présente, du côté tourné vers la chambre de lubrifiant (17), au moins une rainure (31) qui est reliée à l'entrée de lubrifiant.

7. Dispositif de lubrification selon l'une quelconque des revendications précédentes, dans lequel la rainure (31) est réalisée sous forme rectiligne, circulaire ou hélicoïdale.

8. Procédé de fonctionnement d'un dispositif de lubrification selon l'une quelconque des revendications 1 à 7, comprenant les étapes de procédé suivantes :
- introduction de lubrifiant dans la chambre de lubrifiant (17) par le biais de l'entrée de lubrifiant (23),
- déplacement simultané de l'unité de piston (15) de telle sorte que le volume de la chambre de lubrifiant soit agrandi,
- mise à disposition de lubrifiant au niveau de la sortie de lubrifiant (21),
- déplacement simultané de l'unité de piston (15) de telle sorte que le volume de la chambre de lubrifiant (17) soit réduit.

9. Procédé selon la revendication 8, dans lequel les étapes de procédé sont répétées de manière cyclique.

10. Procédé selon la revendication 8 ou 9, dans lequel les étapes de procédé suivantes sont mises en oeuvre avant le premier agrandissement du volume :
- remplissage, avec du lubrifiant, de la liaison entre l'entrée de lubrifiant (23) et la chambre de lubrifiant (17),
- remplissage, avec du lubrifiant, de la chambre de lubrifiant (17),
- ventilation simultanée de la chambre de lubrifiant,
- insertion de l'unité de piston (15) de telle sorte qu'aucun gaz ne parvienne jusqu'à la chambre de lubrifiant.
